# EUROPÄISCHE PATENTSCHRIFT

(11) **EP 4 368 844 B1**
(45) Veröffentlichungstag und Bekanntmachung des Hinweises auf die Patenterteilung: **17.09.2025**
(21) Anmeldenummer: 23208347.7
(22) Anmeldetag: 07.11.2023
(51) Int. Cl.: F16B 2/12, F16M 13/02, F16M 11/08, F16B 9/02, A61G 7/10

(54) **PATIENTENLIFTER MIT EINEM LINEARANTRIEB**
PATIENT LIFT WITH A LINEAR ACTUATOR
LÈVE-PATIENT AVEC UN ACTIONNEUR LINÉAIRE

(30) Priorität: 10.11.2022 DE 202022106335 U
(43) Veröffentlichungstag der Anmeldung: 15.05.2024
(73) Patentinhaber: DewertOkin GmbH, 32278 Kirchlengern (DE)
(72) Erfinder: HILLE, Armin, 33659 Bielefeld (DE)
(74) Vertreter: Kleine, Hubertus

(56) Entgegenhaltungen:
- EP-A1- 4 078 785
- US-A1- 2011 315 844
- US-A1- 2019 047 487

## Beschreibung

Die Erfindung betrifft einen Patientenlifter mit einem elektromotorischen Linearantrieb zur Verstellung von bewegbaren Komponenten des Patientenlifters und mit einem Steuergerät für den elektromotorischen Linearantrieb, das mit mindestens einer Schwenkhalterung an einem Rohr oder einer Stange befestigt ist.

Um ein Gerät ergonomisch und bequem und dadurch auch sicher bedienen zu können, ist eine Ausrichtung des Geräts in Richtung eines Benutzers sinnvoll. Zu diesem Zweck sind Schwenkhalterungen bekannt, mit denen ein Gerät fest montiert und dennoch flexibel zu dem Benutzer hin geschwenkt werden kann.

Beispielsweise werden im Klinik- oder Pflegebereich Patientenlifter eingesetzt, die einen elektromotorischen Antrieb aufweisen, um Patienten anheben und/oder umlagern zu können oder die als Aufstiegshilfe eingesetzt werden können. Solche Patientenlüfter weisen in der Regel eine Steuervorrichtung mit Bedienelementen auf, die mittels einer Schwenkhalterung an einem Rohr oder einer Stange eines Gestells des Patientenlifters schwenkbar montiert ist, um von verschiedenen Seiten aus bedient werden zu könner Beispielsweise offenbart EP 4 078 785 A1 eine Anordnung gemäß dem Oberbegriff von Anspruch 1.

Bekannte Ausgestaltungen derartiger Schwenkhalterungen umfassen gelenkig mit dem Gestell verbundenen Auslegerarme, an denen die Steuervorrichtung montiert ist. Häufig weist die Steuervorrichtung auch wiederaufladbare Batterien zur Stromversorgung des elektromotorischen Antriebs auf. Aufgrund des dadurch nicht unerheblichen Gewichts der Steuervorrichtung sind die Gelenkarme und die sie tragenden Gelenke entsprechend solide zu dimensionieren und sind dadurch material- und kostenaufwendig.

Es ist eine Aufgabe der vorliegenden Erfindung, eine Anordnung der eingangs genannten Art zu schaffen, die bei geringem Materialeinsatz eine schwenkbare Anordnung eines Geräts, zum Beispiel einer Steuervorrichtung eines Patientenlifters, an einem Rohr oder einer Stange ermöglicht.

Diese Aufgabe wird durch einen Patientenlifter gemäß Anspruch 1 gelöst.

Bei dem erfindungsgemäßen Patientenlifter wird durch den Spannring die Montage an dem Rohr oder der Stange möglich, ohne dass dieses speziell für die

Schwenkhalterung vorgesehene Aufnahmen aufweisen muss. Die Schwenkhalterung kann so auch einfach nachgerüstet werden. Unabhängig von der Querschnittsform des Rohrs oder der Stange weist der Spannring die kreiszylinderförmige Umfangsfläche auf, um den Drehring drehbar zu lagern. Die großflächige Lagerung entlang des gesamten Umfangs des Spannrings ermöglicht es, größere Lagerungskräfte aufzunehmen, auch wenn der Spannring beispielsweise kostengünstig als Kunststoff-Spritzgussteile gefertigt ist.

Die Schwenkhalterung bietet zudem die Möglichkeit, die Montagekonsole und damit das Gerät nah am äußeren Umfang des Rohrs bzw. der Stange anzuordnen, wodurch auch bei einem höheren Gewicht des Geräts nur relativ geringe Hebelkräfte auf die Schwenkhalterung wirken. Bei geringem Materialeinsatz kann so eine Schwenkhalterung auch für ein Gerät mit einem hohen Gewicht genutzt werden.

Vorteilhafte Weiterbildungen und Ausgestaltungen des Patientenlifters sind Gegenstand der abhängigen Ansprüche.

In einem vorteilhaften Patientenlifter ist der Spannring zweigeteilt und weist zwei Spannringhälften auf, die gegeneinander verspannbar sind. Auf diese Weise kann der Spannring an beliebigen Stellen um das Rohr oder die Stange gelegt werden und dort montiert werden.

Weiter bevorzugt ist an mindestens einer Seite des Spannrings ein nach außen überstehender Kragen ausgebildet oder eine nach außen überstehende Auflageplatte angeordnet. Durch den Kragen oder die Anlageplatte wird die axiale Position des Drehrings gegenüber dem Spannring festgelegt.

In einem weiteren vorteilhaften Patientenlifter ist zwischen dem Spannring und dem Drehring eine Rastanordnung vorhanden. So können definierte Schwenkstellungen eingenommen werden. Bevorzugt kann zu diesem Zweck am Spannring ein Rastzahnkranz ausgebildet sein und am Drehring eine Rastzunge, die rastend in den Rastzahnkranz eingreift. Dabei kann der Rastzahnkranz um den gesamten Umfang ausgebildet sein oder sich nur über einem Teil des Umfangs des Spannrings erstrecken. Ein Übergang zu einem hervorstehenden Abschnitt, der ohne Rasterung ausgebildet ist, kann als Anschlag für die Rastzunge dienen, um den Schwenkbereich einzuschränken.

Besonders vorteilhaft kann das Rohr, das die mindestens eine Schwenkhalterung umgreift, ein Standrohr des Linearantriebs sein. Somit kann die für den Linearantrieb benötigte Steuervorrichtung an dem Linearantrieb selbst montiert werden, was den Aufbau mechanisch und im Hinblick auf Kabelverbindungen zwischen der Steuervorrichtung und dem Linearantrieb vereinfacht. Alternativ kann das Rohr, das die mindestens eine Schwenkhalterung umgreift, Teil eines Gestells des Patientenlifters sein. In beiden Fällen kann eine Bedienung des Linearantriebs über Bedienelemente der Steuervorrichtung von jeder Seite des Patientenlifters aus erfolgen, indem die Steuervorrichtung mithilfe der Schwenkhalterungen in eine gewünschte Stellung verschwenkt wird.

Die Erfindung wird nachfolgend anhand eines Ausführungsbeispiels mithilfe von Figuren näher erläutert. Die Figuren zeigen:
- Figur 1: eine räumliche Gesamtansicht einer Anordnung mit einem Linearantrieb, einer Steuervorrichtung und Schwenkhalterungen in einem ersten Ausführungsbeispiel;
- Figur 2: eine räumliche Ansicht eines Teils der Steuervorrichtung und einer der Schwenkhalterungen aus Figur 1;
- Figur 3: eine räumliche Ansicht des Teils der Steuervorrichtung gemäß Figur 2 mit an montierter Schwenkhalterung;
- Figur 4: ein Ausschnitt der Anordnung gemäß Figur 1 in einer räumlichen Explosionsdarstellung;
- Figur 5: eine räumliche Gesamtansicht einer Anordnung mit einem Linearantrieb, einer Steuervorrichtung und Schwenkhalterungen in einem zweiten Ausführungsbeispiel;
- Figur 6: eine räumliche Ansicht der Steuervorrichtung und der Schwenkhalterungen aus Figur 5; und
- Figur 7: eine räumliche Ansicht eines Teils der Steuervorrichtung und einer der Schwenkhalterungen aus Figur 6.

Die Figuren zeigen Ausführungsbeispiele eines Patientenlifters aus einem Linearantrieb 10, einer Steuervorrichtung 20 und zwei Schwenkhalterungen 30 in unterschiedlichen Darstellungen aus unterschiedlichen Blickrichtungen. In allen Figuren kennzeichnen gleiche Bezugszeichen gleiche Elemente. Aus Gründen der Übersichtlichkeit sind nicht in allen Figuren alle Elemente mit Bezugszeichen versehen.

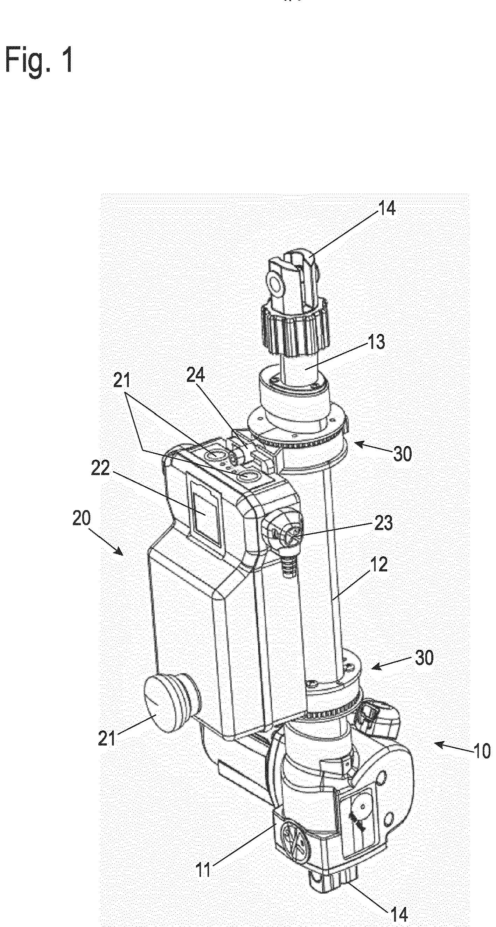

Ein erstes Ausführungsbeispiel des Patientenlifters ist in den Figuren 1-4 wiedergegeben. Figur 1 zeigt zunächst eine räumliche Gesamtansicht des Patientenlifters aus dem Linearantrieb 10, der Steuervorrichtung 20 und den beiden Schwenkhalterungen 30. Die Steuervorrichtung 20 dient in diesem Ausführungsbeispiel der Ansteuerung des Linearantriebs 10.

Bei dem dargestellten Ausführungsbeispiel ist die Steuervorrichtung 20 als ein Gerät im Sinne dieser Anmeldung an ein Standrohr 12 des Linearantriebs 10 anmontiert. Das Standrohr 12 des Linearantriebs 10 wird somit als Rohr bzw. Stange im Sinne der Anmeldung eingesetzt.

Es wird auf diese Weise eine kompakte Einheit aus Antrieb und Steuerung geschaffen. In alternativen Ausgestaltungen können die hier gezeigten Schwenkhalterungen 30 auch verwendet werden, um die Steuervorrichtung 20 oder ein anderes Gerät an beispielsweise an einem Rohr oder einer Stange eines Gestells des Patientenlifters zu montieren.

Der Linearantrieb 10 weist eine Motor- und Getriebeeinheit 11 auf, die eine Spindel antreibt, die hier nicht sichtbar in dem Standrohr 12 angeordnet ist. Bei Betätigung der Motor- und Getriebeeinheit 11 und Drehung der Spindel wird aus dem Standrohr 12 ein Hubrohr 13 ausgefahren bzw. in das Standrohr 12 eingefahren. An der Motor- und Getriebeeinheit 11 und dem Hubrohr 13 ist jeweils ein Gabelkopf 14 angeordnet, über den der Linearantrieb 10 montiert wird und seine Bewegung an beispielsweise das Gestell des Patientenlifters überträgt.

Die Steuervorrichtung 20 weist Bedienelemente 21 zur Steuerung des Linearantriebs 10 auf. Es ist weiter ein Anzeigeelement 22 in diesem Ausführungsbeispiel vorgesehen, auf dem Statusanzeigen o.ä. wiedergegeben werden können. Durch die Verschwenkbarkeit der Steuervorrichtung 20 können die Bedienelemente 21 bzw. das Anzeigeelement 22 vom Benutzer gut erreicht bzw. eingesehen werden. Die Bedienung kann dadurch auch unmittelbar an der Steuervorrichtung 20 bequem und sicher erfolgen, wodurch auf eine zusätzliche, ggf. kabelgebundene Handbedieneinheit, die sonst häufig im Zusammenhang mit Linearantrieben eingesetzt wird, verzichtet werden kann.

Zum Anschluss der Steuervorrichtung 20 an ein Energieversorgungsnetz und/oder zur Verbindung mit dem Linearantrieb 10 sind vorliegend zwei Kabelanschlüsse 23 vorhanden, die hier ohne angeschlossenes Kabel gezeigt sind. Im oberen und unteren Bereich der Steuervorrichtung 20 ist jeweils eine Befestigungsöse 24 am Gehäuse angebracht, über die die Steuervorrichtung 20 an jeweils einer Schwenkhalterung 30 montiert ist.

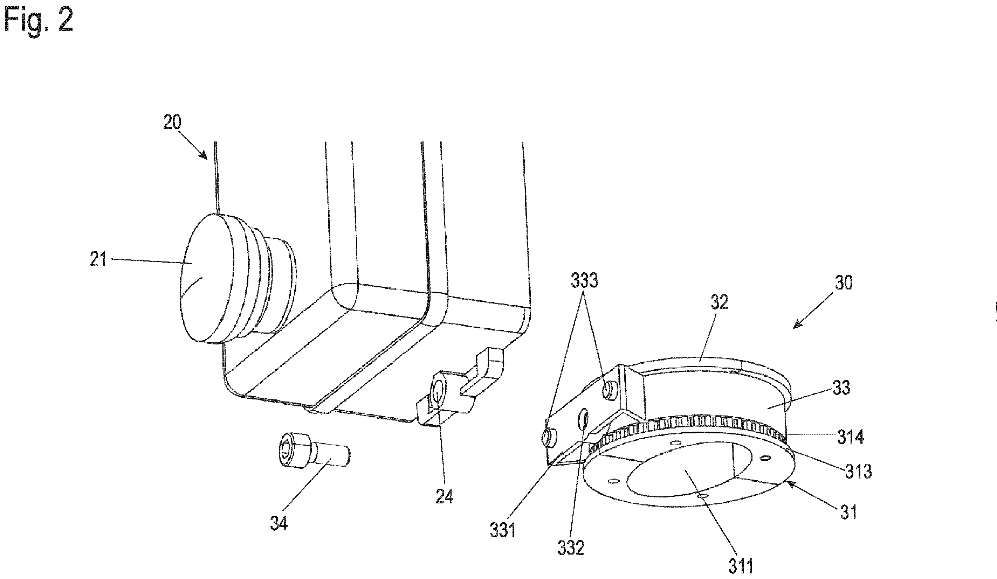

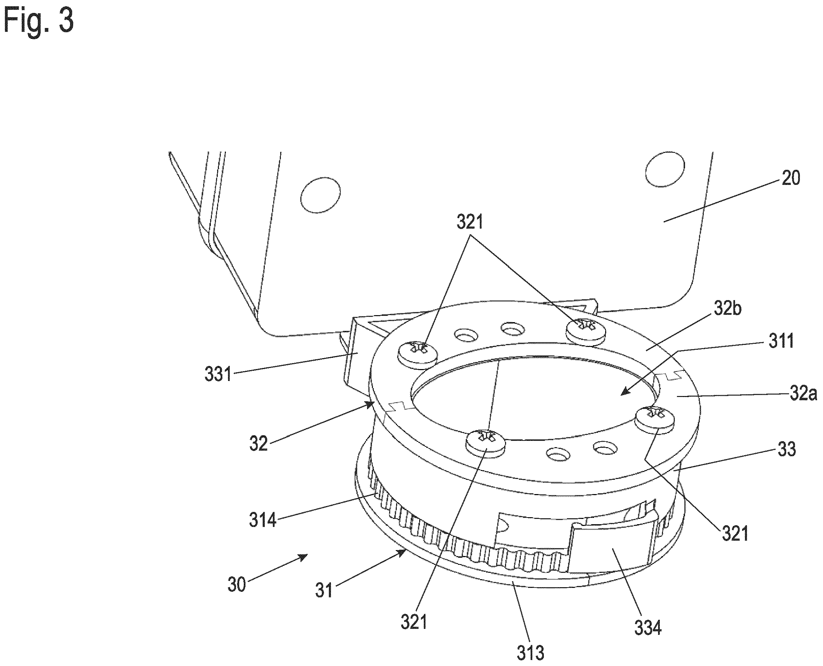

In den Figuren 2 und 3 ist jeweils ein unterer Bereich der Steuereinrichtung 20 sowie eine der Schwenkhalterung 30 ohne den Linearantrieb 10 dargestellt. Die Figuren sind räumliche Darstellungen aus unterschiedlichen Blickrichtungen. In Figur 2 ist die Schwenkhalterung 30 separat vor der Montage mit der Steuervorrichtung 20 wiedergegeben und in Figur 3 sind beide Komponenten miteinander verbunden.

Die Schwenkhalterung 30 weist einen Spannring 31 auf, der in seinem hinteren Bereich eine Ausnehmung 311 aufweist, durch die das Standrohr 12 des Linearantriebs 10 führt. Dabei klemmt der Spannring 31 auf dem Standrohr 12 kraftschlüssig.

Nach unten in der Figur 2 ist der Spannring 31 von einem Kragen 313 abgeschlossen, der nach außen über eine in dieser Figur nicht sichtbare Umfangsfläche des Spannrings 31 hervorsteht. Nach oben hin ist eine Auflageplatte 32 aufgesetzt und mit dem Spannring 31 verschraubt, die ebenfalls nach außen über die Umfangsfläche hervorsteht. Um die Umfangsfläche ist ein Drehring 33 gelegt, der nach oben bzw. unten durch den Kragen 313 bzw. die Auflageplatte 32 geführt ist. Entsprechend kann der Drehring 33 sich nur radial um den Spannring 31 drehen. Am Drehring 33 ist eine Montagekonsole 331 angeordnet bzw. ausgebildet, die der Montage der Steuervorrichtung 20 dient. Zu diesem Zweck weist sie eine zentrale Mutternaufnahme 332 auf, in die eine Mutter eingeschoben werden kann. Alternativ kann ein Innengewinde an dieser Stelle vorgesehen sein. Neben der Mutternaufnahme 332 sind zwei Zentrierstifte 333 angeordnet.

Um die Steuervorrichtung 20 an der Schwenkhalterung 30 zu befestigen, wird eine Schraube 34 durch die Befestigungsöse 24 geführt und in die Mutter, die in der Mutternaufnahme 332 angeordnet ist, eingeschraubt. Zusätzlich sind die Zentrierstifte 333 in entsprechende Sacklochbohrungen im Bereich der Befestigungsöse 24 eingesetzt.

Integral mit dem Spannring 31 ist ein Rastzahnkranz 314 ausgebildet, der mit einer am Drehring 33 angeordneten bzw. ausgebildeten Rastzunge 334 zusammenwirkt und beim Verdrehen des Drehrings 33 eine Vielzahl von möglichen Rastposition vorgibt.

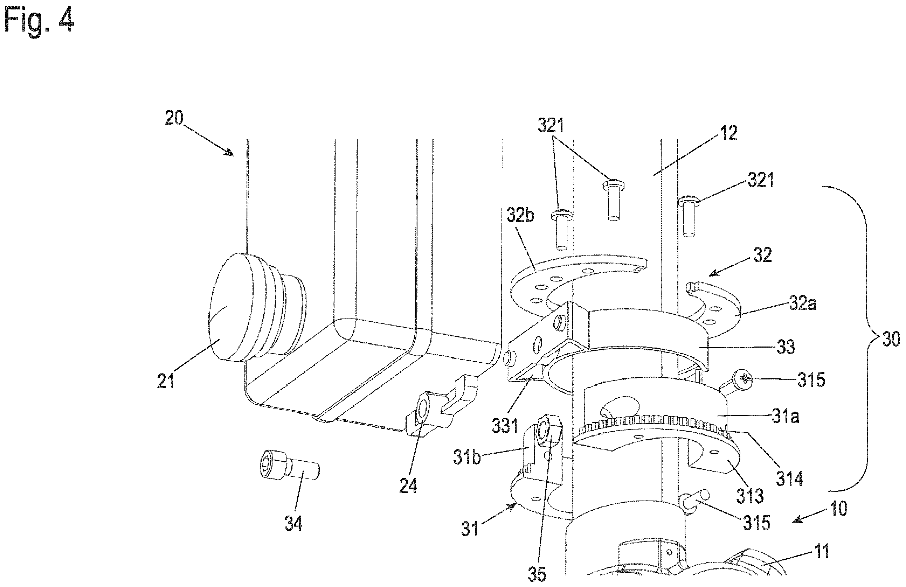

Figur 4 zeigt in einer räumlichen Explosionsdarstellung den Aufbau der Schwenkhalterung 30 und ihre Anordnung am Standrohr 12 detaillierter.

Um die Schwenkhalterung 30 an Standrohr 12 montieren zu können, ist der Spannring 31 zweigeteilt ausgebildet und weist zwei Spannringhälften 31a, b auf. Diese Spannringhälften 31a, b werden um das Standrohr 12 gelegt und mittels Schrauben 315 zueinander verspannt, wodurch der Spannring 31 an dem Standrohr 12 befestigt ist. In dieser Figur ist auch die Umfangsfläche des Spannrings 31 zu erkennen. Sie ist ein Abschnitt eines kreisrunden Zylinders, um die Drehbewegung des Drehrings 33 zu ermöglichen. Die Ausnehmung 311 ist dagegen an den Querschnitt des Standrohrs 12 bzw. allgemeiner des Rohrs oder der Stange, an der die Montage erfolgen soll, angepasst. Im vorliegenden Fall ist dieses ein ovaler Querschnitt, wodurch eine Verdrehsicherung des Spannrings 31 bereits durch die Form des Standrohrs 12 gegeben ist.

Auf den Spannring 31 wird dann der Drehring 33 aufgesetzt, der im dargestellten Beispiel einteilig ist. Aufgrund seines größeren Durchmessers verglichen mit der Ausnehmung 311 des Spannrings 31 kann der Drehring 33 über hervorstehende Komponenten zum Beispiel im Bereich des Hubrohres 13 des Linearantriebs 10 geführt werden. Alternativ kann auch der Drehring zwei- oder mehrgeteilt ausgeführt sein.

Auf den Spannring 31 mit dem aufgesetzten Drehring 33 wird danach die Auflageplatte 32 aufgesetzt, die wie der Spannring 31 zweigeteilt ausgeführt ist und Plattenhälften 32a und 32b aufweist. Die Auflageplatte 32 wird mithilfe von Schrauben 321 mit dem Spannring 31 verschraubt. In der Figur 4 ist zudem auch mit dem Bezugszeichen 35 die Mutter zu erkennen, die in die Mutternaufnahme 332 der Montagekonsole 331 eingesetzt wird und in die die Schraube 34 eingeschraubt wird.

Die in Figur 1 sichtbare obere Schwenkhalterung 30 ist identisch zu der in den Figuren 2-4 dargestellten unteren Schwenkhalterung 30 aufgebaut. Die Anzahl der verwendeten Schwenkhalterungen 30 kann dabei an die Größe und/oder das Gewicht des zu haltenden und zu verschwenkenden Geräts angepasst sein. Kleinere und/oder leichtere Geräte können beispielsweise auch mit nur einer Schwenkhalterung 30 an einem Rohr oder einer Stange befestigt werden.

Bei der hier dargestellten Schwenkhalterung 30 ist eine Rasterung vorgesehen, um das Gerät in einer bestimmten Schwenkposition zu halten. In alternativen Ausgestaltungen kann vorgesehen sein, den Drehring 33 weniger hoch als die Umfangsfläche auszubilden, wodurch beim Anheben des Geräts die Rastzunge 334 aus der Verrastung mit dem Rastzahnkranz 314 gelangt. Durch Anheben des Geräts kann dann eine Einstellung der Schwenkposition erfolgen und beim Wiederabsenken des Geräts erfolgt ein Einrasten in der gewünschten Position. In dem Fall kann die Rastzunge 334 auch so steif ausgebildet sein, dass eine Drehbewegung im eingerasteten Zustand nicht möglich ist. Das Anheben kann gegen die Wirkung der Schwerkraft oder einer Feder erfolgen. Ein Vorteil des Verstellens mittels Anhebens ist, dass dieses deutlich leiser ist als eine Verdrehung mit Verrastung auf dem Rastzahnkranz 314 ohne Anheben.

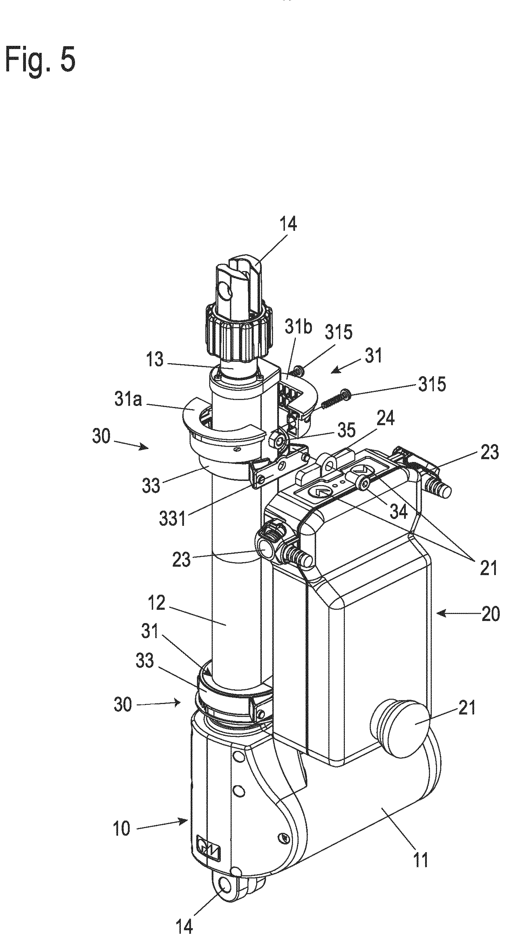

In den Figuren 5-7 ist ein zweites Ausführungsbeispiel einer Anordnung aus einem Linearantrieb 10, einer Steuervorrichtung 20 und zwei Schwenkhalterungen 30 wiedergegeben.

Figur 5 zeigt zunächst in ähnlicher Weise wie Figur 1 eine räumliche Gesamtansicht der Anordnung dieser Komponenten. Wiederum dient die Steuervorrichtung 20 in diesem Ausführungsbeispiel der Ansteuerung des Linearantriebs 10, wobei auch hierbei ein Einsatz innerhalb eines Patientenlifters denkbar ist.

Vom Grundaufbau her entspricht die Anordnung der Figur 5 der Anordnung gemäß Figur 1, auf deren Beschreibung hiermit explizit verwiesen wird.

In gleicher Weise wie bei Figur 1 ist die Steuervorrichtung 20 um das Standrohr 20 des Linearantriebs 10 verschwenkbar gelagert. Die Steuervorrichtung 20 unterscheidet sich von der des ersten Ausführungsbeispiels darin, dass kein Display als Anzeigeelement vorhanden ist.

Wie beim ersten Ausführungsbeispiel werden zum Zweck der Lagerung der Steuervorrichtung 20 zwei Schwenkhalterungen 30 eingesetzt, die jeweils am oberen bzw. am unteren Ende der Steuervorrichtung 20 angeordnet sind. Die am oberen Ende eingesetzte Schwenkhalterung 30, die benachbart zum Hubrohr 13 am Standrohr 12 befestigt ist, ist in der Figur 5 beispielhaft in Art einer Explosionszeichnung wiedergegeben. Zudem ist die Steuervorrichtung 20 beabstandet von den Schwenkhalterungen 30 dargestellt.

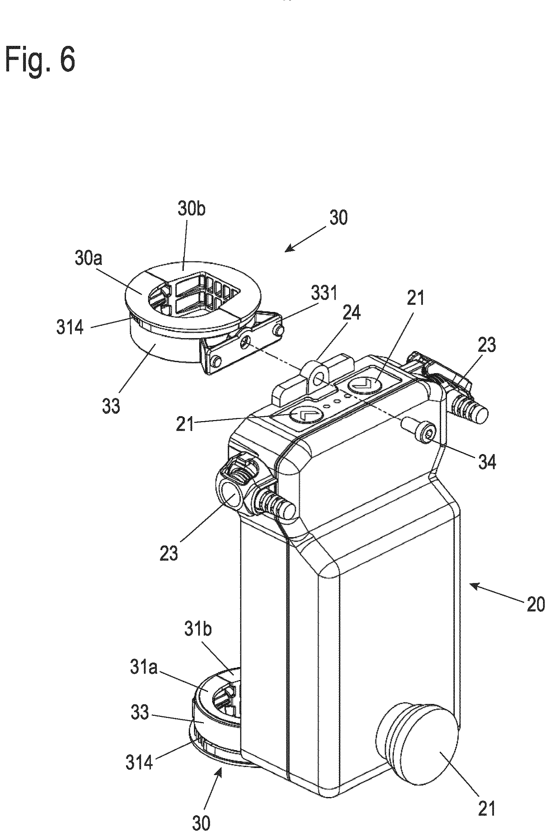

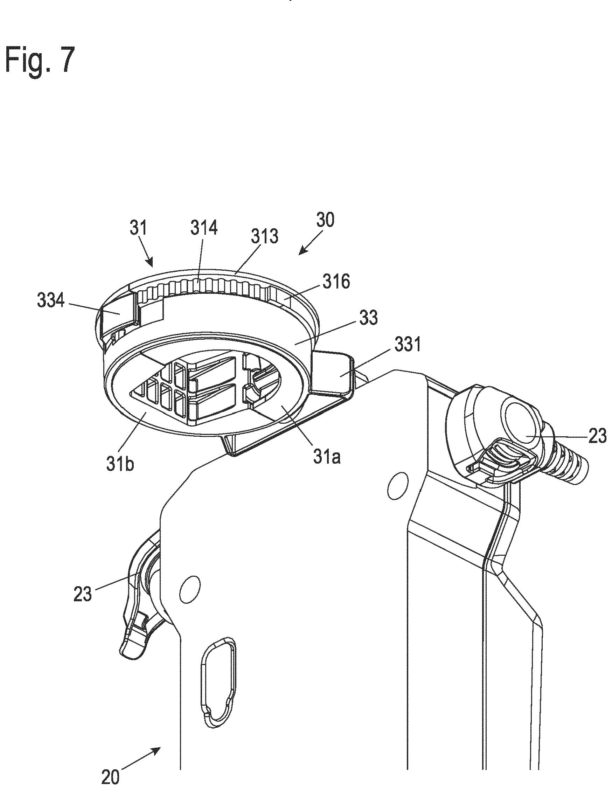

Figur 6 zeigt die Anordnung gemäß Figur 5 ohne den Linearantrieb 10. Bei der Figur 6 ist die untere der Schwenkhalterung 30 an der Steuervorrichtung 20 befestigt, während die obere der Schwenkhalterung 30 zusammengesetzt, jedoch noch nicht mit der Schwenkhalterung 20 verbunden, gezeigt ist. Die Figur 7 schließlich zeigt die obere Schwenkhalterung 30 und ein Teil der Steuervorrichtung 20 nochmals aus einer anderen Blickrichtung.

Zur Befestigung der Steuervorrichtung 20 an den Schwenkhalterungen 30 ist wiederum am oberen und unteren Ende der Steuervorrichtung 20 jeweils eine Befestigungsöse 24 angeordnet, die mit einer Montagekonsole 331 der jeweiligen Schwenkhalterung 30 mithilfe einer Kombination aus einer Schraube 34 und einer Mutter 35 befestigt wird. Die Montagekonsole 331 ist wiederum wie beim ersten Ausführungsbeispiel an einem Drehring 33 der Schwenkhalterung 30 angebracht oder integral mit dieser ausgebildet. Der Drehring 33 ist drehbar auf einem Spannring 31 gelagert, der aus zwei Spannringhälften 31a, b zusammengesetzt ist, die um das Standrohr 12 gelegt werden und mithilfe von zwei Schrauben 315 mit dem Standrohr 12 verspannt werden. Da das Standrohr 12 im zweiten Ausführungsbeispiel der Figuren 5-7 im Querschnitt nicht spiegelsymmetrisch ist, sind die beiden Spannringhälften 31a, b an ihren Innenseiten unterschiedlich geformt.

Ein weiterer Unterschied in den Schwenkhalterungen 30 besteht gegenüber dem ersten Ausführungsbeispiel darin, dass nur an einer Seite des Spannrings 31 ein nach außen überstehender Kragen 313 ausgebildet ist und an der gegenüber liegenden Seite keine Abdeckplatte 32 vorgesehen ist. Dieses bietet den Vorteil, dass der Spannring 31 aus einer Richtung einfach in den Drehring 33 eingesteckt werden kann. Zur Befestigung der Steuervorrichtung 20 werden zwei Schwenkhalterungen 30 eingesetzt, wobei in beiden Fällen der Kragen 313 außen angeordnet ist. Durch das Zusammenspiel beider Schwenkhalterungen 30 ist nach dem Befestigen der Steuervorrichtung 20 an beiden Schwenkhalterungen 30 die Steuervorrichtung 20 dennoch axial festgelegt. Alternativ können die Schwenkhalterungen 30 auch so orientiert werden, dass der Kragen jeweils innenseitig, d.h. zur jeweils anderen Schwenkhalterung 30 hin weisend angeordnet ist.

Zum definierten Einstellen einer Schwenkposition ist auch bei diesem Ausführungsbeispiel der Spannring 31 zumindest in einem Teil seines Umfangs mit einem Rastzahnkranz 314 versehen. Dieser wirkt mit einer Rastzunge 334 zusammen, die am Drehring 33 ausgebildet oder angeordnet ist.

Im Unterschied zum ersten Ausführungsbeispiel ist der Rastzahnkranz 314 nicht um den gesamten Umfang ausgebildet, sondern nur um einen Teil des Umfangs. In einem verbleibenden Abschnitt 316 des Umfangs steht der Spannring ohne Rasterung hervor, wobei der Übergang zu diesem hervorstehenden Abschnitt 316 als Anschlag für die Rastzunge 334 dient. Auf diese Weise ist der einstellbare Schwenkbereich der Schwenkhalterung 30 begrenzt, wodurch beispielsweise ein unkontrolliertes Anschlagen der Steuervorrichtung 20 an dem Linearantrieb 10 oder an weiteren Komponenten des Aufbaus verhindert werden kann.

### Bezugszeichen

- 10: Linearantrieb
- 11: Motor- und Getriebeeinheit
- 12: Standrohr
- 13: Hubrohr
- 14: Gabelkopf

- 20: Steuervorrichtung
- 21: Bedienelement
- 22: Anzeigeelement
- 23: Kabelanschluss
- 24: Befestigungsöse

- 30: Schwenkhalterung
- 31: Spannring
- 31a, b: Spannringhälfte
- 311: Ausnehmung
- 312: Umfangsfläche
- 313: Kragen
- 314: Rastzahnkranz
- 315: Schraube
- 316: hervorstehender Abschnitt
- 32: Auflageplatte
- 32a, b: Plattenhälfte
- 321: Schraube
- 33: Drehring
- 331: Montagekonsole
- 332: Mutternaufnahme
- 333: Zentrierstift
- 334: Rastzunge
- 34: Schraube
- 35: Mutter

## Patentansprüche

1. Patientenlifter mit einem elektromotorischen Linearantrieb (10) zur Verstellung von bewegbaren Komponenten des Patientenlifters und mit einem Steuergerät für den elektromotorischen Linearantrieb (10), das mit mindestens einer Schwenkhalterung an einem Rohr oder einer Stange befestigt ist, **dadurch gekennzeichnet, dass**
die mindesten eine Schwenkhalterung (30) einen Spannring (31) umfasst, der das Rohr oder die Stange klemmend umgreift und eine kreiszylinderförmige Umfangsfläche aufweist, auf der ein Drehring (33) drehbar gelagert ist, der eine Montagekonsole (331) aufweist, an der das Steuergerät montiert ist.

2. Patientenlifter nach Anspruch 1, bei dem der Spannring (31) zweigeteilt ist und zwei Spannringhälften (31a, 31b) aufweist, die gegeneinander verspannbar sind.

3. Patientenlifter nach Anspruch 1 oder 2, bei dem an mindestens einer Seite des Spannrings (31) ein nach außen überstehender Kragen (313) ausgebildet ist oder eine nach außen überstehende Auflageplatte (32) angeordnet ist.

4. Patientenlifter nach einem der Ansprüche 1 bis 3, bei dem zwischen Spannring (31) und Drehring (33) eine Rastanordnung vorhanden ist.

5. Patientenlifter nach Anspruch 4, bei dem am Spannring (31) ein Rastzahnkranz (314) ausgebildet ist und am Drehring (33) eine Rastzunge (334), die rastend in den Rastzahnkranz (314) eingreift.

6. Patientenlifter nach Anspruch 5, bei dem der Rastzahnkranz (314) nur in einem Teil des Umfangs des Spannrings (31) ausgebildet ist, wobei ein Übergang zu einem hervorstehenden Abschnitt (316), der ohne Rasterung ausgebildet ist, als Anschlag für die Rastzunge (334) dient.

7. Patientenlifter nach einem der Ansprüche 1 bis 6, bei dem das Rohr, das die mindestens eine Schwenkhalterung (30) umgreift, ein Standrohr (12) des Linearantriebs (10) ist.

8. Patientenlifter nach einem der Ansprüche 1 bis 6, bei dem das Rohr, das die mindestens eine Schwenkhalterung (30) umgreift, Teil eines Gestells des Patientenlifters ist.

## Claims

1. Patient lift having an electromotive linear drive (10) for adjusting movable components of the patient lift and having a control device for the electromotive linear drive (10), which is attached to a tube or rod by means of at least one swivel mount,
**characterized in that**
the at least one swivel mount (30) comprises a clamping ring (31) which clamps around the tube or rod and has a circular cylindrical circumferential surface on which a rotating ring (33) is rotatably mounted, which has a mounting bracket (331) on which the control device is mounted.

2. Patient lift according to claim 1, in which the clamping ring (31) is divided into two parts and has two clamping ring halves (31a, 31b) that can be braced against each other.

3. Patient lift according to claim 1 or 2, in which a collar (313) projecting outwardly is formed on at least one side of the clamping ring (31) or an outwardly projecting support plate (32) is arranged.

4. Patient lift according to one of claims 1 to 3, in which a locking arrangement is provided between the clamping ring (31) and the rotating ring (33).

5. Patient lift according to claim 4, in which a locking tooth ring (314) is formed on the clamping ring (31) and a locking tongue (334) is formed on the rotating ring (33), which engages in a locking manner in the locking tooth ring (314).

6. Patient lift according to claim 5, in which the locking tooth ring (314) is formed only in a part of the circumference of the clamping ring (31), wherein a transition to a protruding section (316) which is formed without grating serves as a stop for the locking tongue (334).

7. Patient lift according to one of claims 1 to 6, in which the tube surrounding the at least one swivel mount (30) is a standpipe (12) of the linear drive (10).

8. Patient lift according to one of claims 1 to 6, in which the tube engaging around the at least one swivel mount (30) is part of a frame of the patient lift.

## Revendications

1. Lève-patient avec un actionneur linéaire à moteur électrique (10) destiné à déplacer des composants mobiles du lève-patient et avec une unité de commande pour l'actionneur linéaire à moteur électrique (10) qui est fixée par au moins une monture pivotante sur un tube ou une barre, **caractérisé en ce que** l'au moins une monture pivotante (30) comprend une bague de serrage (31) qui entoure en le serrant le tube ou la barre et qui présente une surface périphérique en forme de cylindre circulaire, sur laquelle est supportée avec possibilité de rotation une bague tournante (33) présentant une console de montage (331) sur laquelle l'unité de commande est montée.

2. Lève-patient selon la revendication 1, dans lequel la bague de serrage (31) est partagée en deux et présente deux moitiés de bague de serrage (31a, 31b) qui peuvent être serrées l'une contre l'autre.

3. Lève-patient selon la revendication 1 ou 2, dans lequel est formé sur au moins un côté de la bague de serrage (31) un collet (313) qui dépasse vers l'extérieur ou une plaque d'appui (32) qui dépasse vers l'extérieur.

4. Lève-patient selon l'une des revendications 1 à 3, dans lequel un dispositif d'enclenchement est prévu entre la bague de serrage (31) et la bague tournante (33).

5. Lève-patient selon la revendication 4, dans lequel une couronne dentée d'enclenchement (314) est formée sur la bague de serrage (31) et une languette d'enclenchement (334) qui se met en prise par enclenchement dans la couronne dentée d'enclenchement (314) est formée sur la bague tournante (33).

6. Lève-patient selon la revendication 5, dans lequel la couronne dentée d'enclenchement (314) est formée seulement sur une partie de la circonférence de la bague de serrage (31), une transition vers une section en saillie (316), conformée sans enclenchement, servant de butée pour la languette d'enclenchement (334).

7. Lève-patient selon l'une des revendications 1 à 6, dans lequel le tube que l'au moins une monture pivotante (30) entoure est un tube stationnaire (12) de l'actionneur linéaire (10).

8. Lève-patient selon l'une des revendications 1 à 6, dans lequel le tube que l'au moins une monture pivotante (30) entoure fait partie d'un châssis du lève-patient.
